# EUROPEAN PATENT SPECIFICATION

(11) **EP 1 988 470 B1**
(45) Date of publication and mention of the grant of the patent: **29.10.2014**
(21) Application number: 08155618.5
(22) Date of filing: 02.05.2008
(51) Int. Cl.: G06F 13/38

(54) **Network device and transmission method thereof**
Netzwerkgerät und Übertragungsverfahren dafür
Dispositif de réseau et son procédé de transmission

(30) Priority: 04.05.2007 TW 96115849
(43) Date of publication of application: 05.11.2008
(73) Proprietor: Realtek Semiconductor Corp., Hsinchu 300 (TW)
(72) Inventor: Yuan, Kuo-Hua, Kao Hsiung City (TW)
(74) Representative: Lang, Christian

(56) References cited:
- US-A- 5 432 907
- US-A1- 2004 174 890
- US-A1- 2005 058 150
- US-B1- 6 754 238
- US-B1- 6 816 505

## Description

The present invention relates to a communication system, especially to communication interface.

Along with fast development of internet applications, individuals and industries depend more and more on network, especially applications of Ethernet has become an important part of the network.

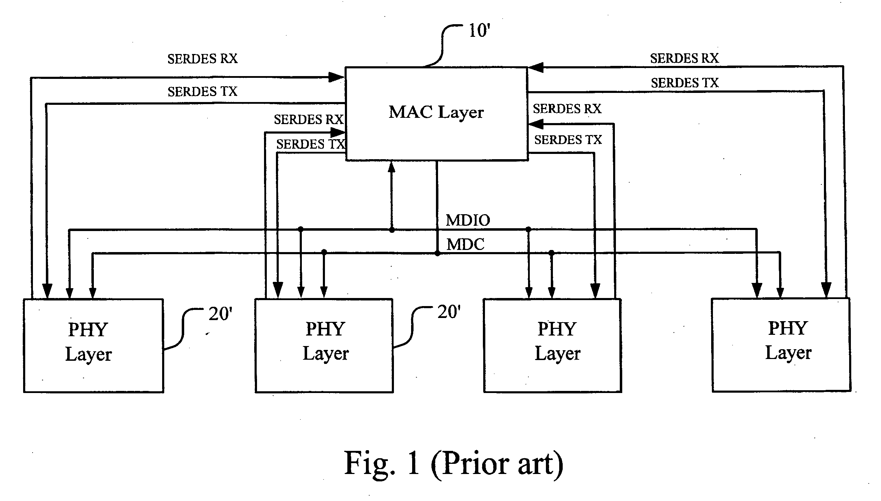

During communication process, chips connect with each other for data/signal transmission and data retrieving/saving in registers. Refer to Fig. 1, a network switch includes a media access controller (MAC) 10', and a plurality of physical layer (PHY) 20' that communicate with the MAC 10'. In specifications of IEEE 802.3, packet transmission is by an independent interface such as Media Independent Interface (MII), Gigabit Media Independent Interface (GMII), and Reduce Media Independent Interface (RMII). And a Management Data Clock (MDC) as well as a Management Data Input Output (MDIO) is used as transmission interface for reading data in registers of the PHY 20'. Because the MII needs to use quite a lot of pins so another prior-art Serializer / Deserializer (SERDES) interface is used to replace the MII for avoiding using too many pins. Refer to Fig- 1, the MAC 10' accesses the plurality of PHY 20' data in registers of each other by the MDC/MDIO interface to know the status of each other and transmit packets to each other by the SERDES interface or the independent interface. The MDC is a single-clock transmission line and is connected to each PHY 20' while the MAC 10' sends clocks to each PHY 20' therethrough. The MDIO is a bi-directional transmission line and is connected to each PHY 20' for data transmission according to MDC clock.

More transmission wires are configured between the MDC/MDIO interface of MAC 10' and that of the plurality of PHY 20'. And, the transmission wires mentioned above occupy more area and increase loadings of circuit layout on the printed circuit board (PCB) or chip layout, especially for MAC 10` coupled with the plurality of PHY 20', which makes circuit design more complicated. For example, the 32-port switch includes 32 PHYs 20' which are connected to MAC 10'. Furthermore, According to the specifications of IEEE 802.3, the MDC/MDIO interface is slow-speed series interface; there is a need to improve poor transmission speed of the MDC/MDIO interface to enhance the performance of the network device.

An example for a method and an apparatus for transport of control information over a data link is given in US 6,754,238 B1.

The document US 5 432 907 is disclosing a hub circuit with an integrated bridge circuit carried out in software including a switch for bypassing the bridge process such that the two bridged networks effectively become one network. An in-band management process in software is disclosed which receives and executes network management commands received as data packets from the LANs coupled to the integrated hub/bridge.

### SUMMARY OF THE INVENTION

Therefore it is one of the objects of the present invention to provide a network device and a transmission method thereof that output access commands in packet gaps simultaneously with outputting a plurality of data packets for accessing register so as to achieve purposes of simplifying transmission circuit, improving heat dissipation efficiency and ensuring accuracy of signal transmission.

It is one of the objects of the present invention to provide a network device and a transmission method thereof that output access commands in packet gaps simultaneously for accessing register so as to simplify transmission circuit.

It is one of the objects of the present invention to provide a network device and a transmission method thereof that send an acknowledge signal for confirming that data in register has been accessed.

It is a further object of the present application to provide a network device and a transmission method which allow the control of a register of another network device based on a command by a host, wherein the controlling does not affect the transmission of data between network devices.

The above-mentioned objects are solved by the network device according to claim 1 and the methods according to claims 7 and 11. Advantageous improvements are subject matter of dependant claims.

A network device according to the present invention comprises a first circuit and a second circuit. The first circuit receives at least one command and generates a serial command according to the at least one received command. The second circuit, which coupled to the first circuit, receives the serial command and transmits a first packet, an inter-packet gap, and a second packet, wherein the inter-packet gap is between the first and the second packets, and the inter-packet gap comprises at least one portion of the serial command. In addition, the second circuit splits the serial command so that the inter-packet gap comprises at least one portion of the serial command.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a block diagram of a conventional network switch;
Fig. 2 is a block diagram of an embodiment according to the present invention;
Fig. 3a and Fig. 3b are a schematic drawing showing packet transmission according to the present invention;
Fig. 4 is a block diagram of a network device of an embodiment according to the present invention;
Fig. 5 is a schematic drawing showing packet transmission of an embodiment according to the present invention;
Fig. 6A is a list of command format of an embodiment according to the present invention;
Fig. 6B is command format transmitted or received by an embodiment according to the present invention;
Fig. 7 shows a list of signal definition of IEEE802.3 specification;
Fig. 8 is a block diagram of another embodiment according to the present invention.

### DETAILED DESCRIPTION OF THE PREFERRED EMBODIMENT

A network device and a transmission method thereof according to the present invention are applied to switching devices. According to the present invention, an interface which is used for transmitting/receiving packet, such as SERDES, MII, GMII, and RMII, is used for simultaneously transmitting/receiving data and accessing registers of each other.

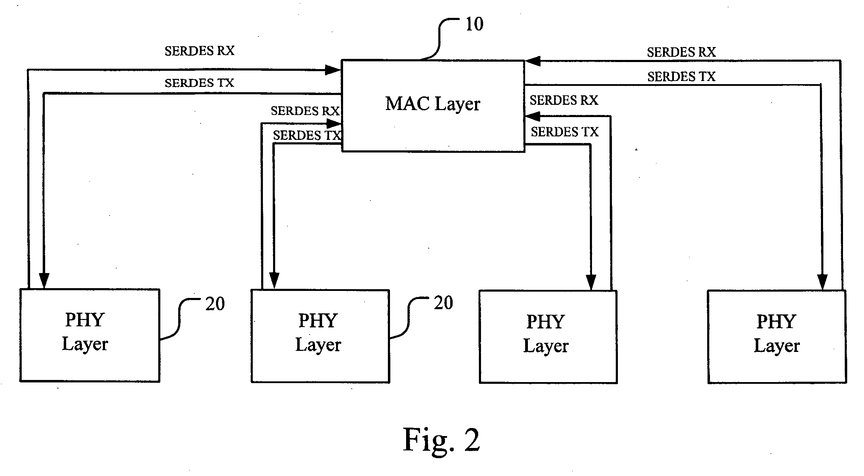

Refer to Fig. 2, the present invention applied to switching device includes at least one MAC 10 and at least one PHY 20. In a network interface card (NIC), the NIC comprises a MAC and a PHY. In a 32-port switch (or gateway, router) comprises at least one MAC and 32 PHYs. the MAC 10 of the switch device is coupled with a plurality of PHY 20. Data and instruction (command) transmission between the MAC 10 and the PHY 20 is via a SERDES interface or a MII interface so as to simplify circuit design. Next embodiments explain how the present invention performs packet data and command over the same interface under requirements of related specifications such as IEEE 802.3.

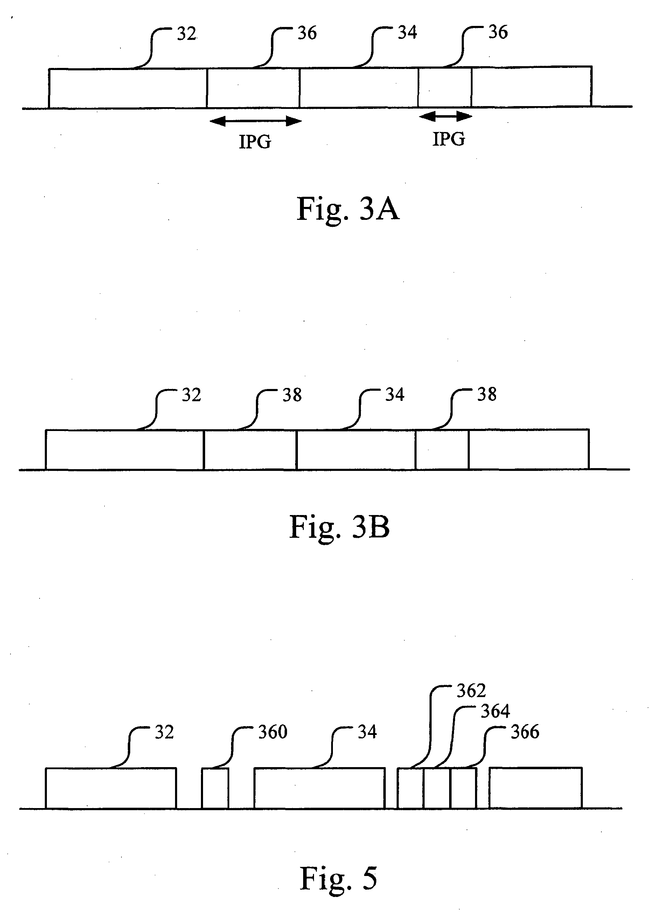

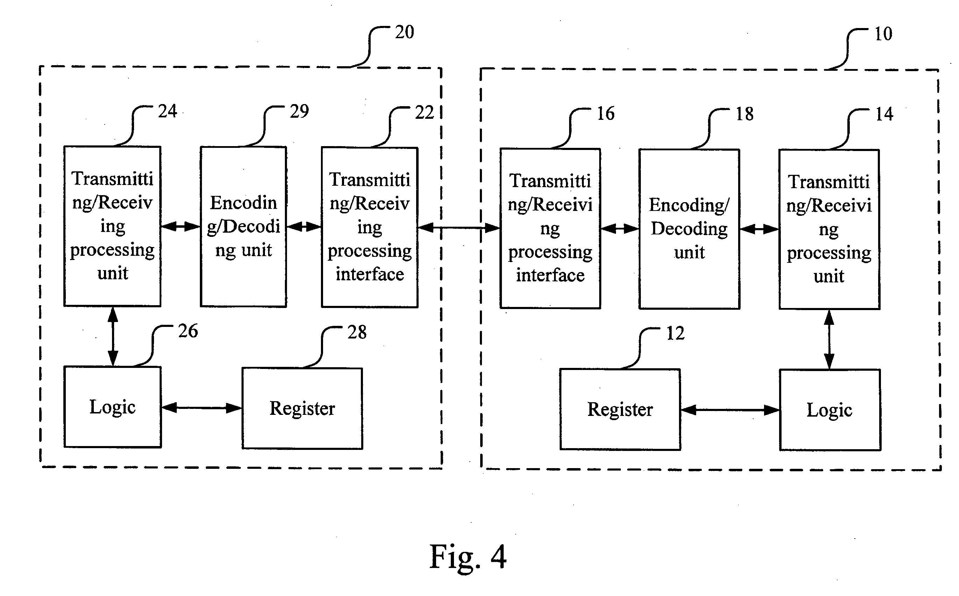

Refer to Fig. 3A & Fig. 3B, according to IEEE 802.3, an inter-packet gap (IPG) 36 is between a first packet 32 and a second packet 34 for separating packets. The IPG 36 is an idle data and meaningless. By such feature, the present invention transmits serial command to simplify transmission circuit. As shown in Fig. 3B, the MAC 10 replaces the idle data of the IPG 36 with serial command 38 so that the MAC 10 can also transmit the serial command 38 to the PHY 20 for accessing register data and knowing status of the PHY 20 while transmitting packet data such as the first packet 32 and the second packet 34 via the SERDES or the MII interface. With reference of Fig. 4, a block diagram of an embodiment according to the present invention is disclosed. The MAC 10 and the PHY 20 can be located in the same chip or respectively in different chips. Refer to Fig. 5, due to various size of the IPG 36 between two consecutive packets, the MAC 10 splits the serial command 38 into a first data 360, a second data 362, a third data 364 and a fourth data 366, etc. so that while the MAC 10 transmits the packet data, the serial command 38 is simultaneously sent to the PHY 20 for controlling the PHY 20 or accessing of register in the PHY 20.

In an embodiment, the MAC 10 includes a first circuit and a first interface. The first circuit and the first interface of an embodiment of the present invention are a transmitting/receiving processing unit 14 and a transmitting/receiving interface 16. The PHY 20 includes a second circuit, a second interface and a third circuit. The second circuit, the second interface and the third circuit of an embodiment of the present invention are a transmitting/receiving interface 22, a transmitting/receiving processing unit 24 and a logic 26. When a computer host sends a command to the MAC 10, a register 12 located in the MAC 10 is used to store command data corresponding to that command, the transmitting/receiving processing unit 14 generates the serial command 38 according to the command data in the register 12. In an embodiment, the serial command 38 can include a plurality of command data from host. The transmitting/receiving interface 16 of the MAC 10 transmits the packet 32, 34, the serial command 38, and the packet 32, 34 to the PHY 20. Then the transmitting/receiving interface 22 of the PHY 20 receives the packet 32, 34, and the serial command 38 and transfers the serial command 38 to the transmitting/receiving processing unit 24. The transmitting/receiving processing unit 24 sends the packet 32, 34, to a network media such as unshielded twisted-pair (UTP) and generates a control command according to the serial command 38. After receiving the control command, the logic 26 accesses the register 28 of the PHY 20. Moreover, after accessing the register 28 of the PHY 20, the logic circuit 26 sends data in the register 28 of the PHY 20 to the MAC 10 by a reverse path.

In another embodiment, the MAC 10 and the PHY 20 respectively include an encoding/decoding unit 18, 29. The encoding/decoding units 18, 29 encodes and decodes packet 32, 34 according to the related specification or/and the serial command 38. In an embodiment, the transmitting/receiving processing unit 14 adds a checking data such as parity check or cyclical redundancy check (CRC) into the serial command 38.

In addition, after receiving the serial command 38, the PHY 20 sends a return data (ex: an acknowledge signal) to the MAC 10 so as to inform the MAC 10 to read data of register of the PHY 20. Once the MAC 10 doesn't receive the acknowledge signal after transmitting the serial command 38 for a certain period time, it can re-send the serial command 38 to the PHY 20. Due to the serial command 38 inserted in the IPG 36, the PHY 20 of a first network device can also send the serial command 38 to the second network device so as to access the data in register of the second network device. That is, the first network device of the present invention can monitor/control the second network device of the present invention via a cable.

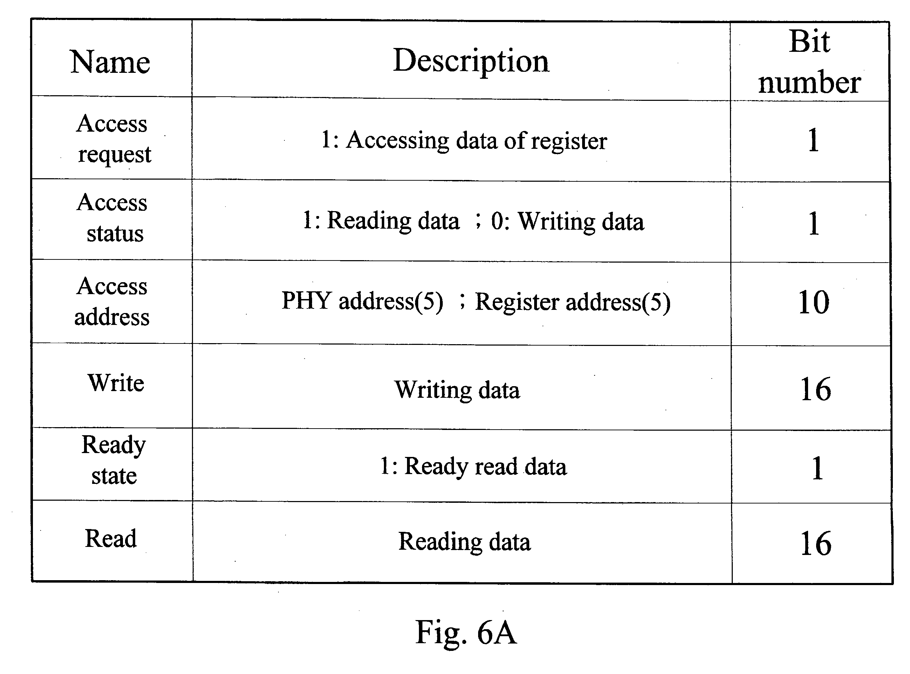

Refer to Fig. 6A. Fig. 6A shows a list of an embodiment of the control registers of the MAC according to the present invention. Together with Fig. 4, the control registers of the MAC 10 are accessed by the host and can store the command from the host. The Name of control registers of the MAC 10 respectively corresponds to a related command. In FIG 6A, the Name of control registers includes such as Access Request, Access Status, Access Address, Write, Ready State, and Read. When the MAC 10 detects that the Access Request register of the MAC 10 is at high level, it reads serial command from corresponding control registers and transmits the serial command to the PHY 20. The Access Status register is set in a reading status or a writing status by the host, and the MAC 10 controls the PHY 20 to read or write registers in the PHY 20 according to the value of the Access Status register. The value of Access Address register addresses an address of the PHY 20 and address of the register in the addressed PHY 20. The Write register and Read register performs data writing or data reading according to the value of the Access Status register. The Ready State register is used to indicate whether the MAC 10 receives the acknowledge signal from the PHY 20 or not. When the Ready State register is set at high voltage level (1), this means to the read or write operation of the register of the PHY 20 has been finished. After the MAC 10 sends the serial command 38 for a period of time and the value of the Ready State register is still at low voltage level (0), the MAC 10 re-sends the serial command 38 to the PHY 20.

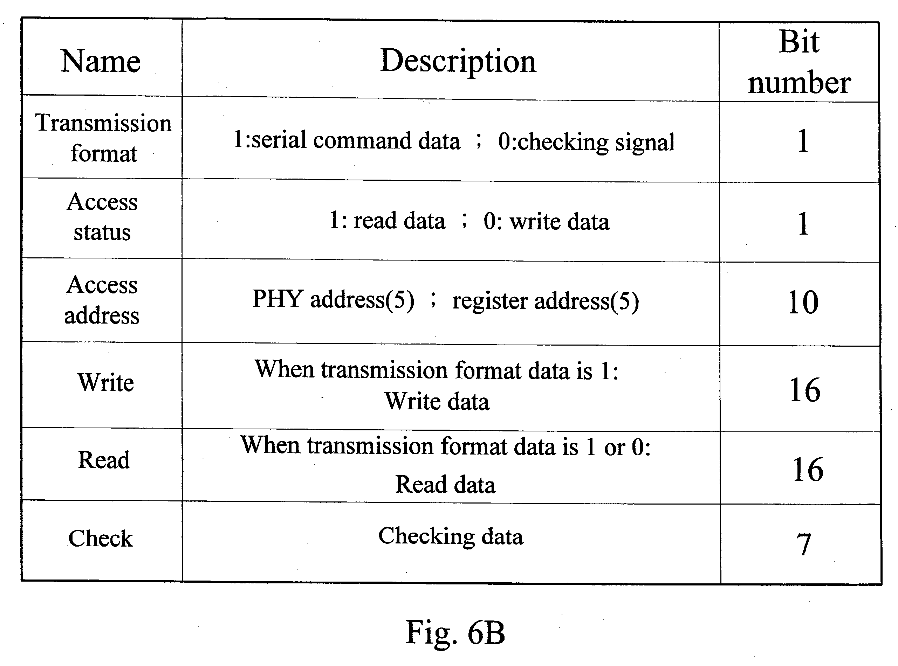

Refer to Fig. 6B. Fig. 6B shows command format transmitted or received by an embodiment according to the present invention. As shown in the figure, the control registers include Transmission Format, Access Status, Access Address, Write, Read and Check. The MAC 10 encodes data of register in FIG. 6B and generates serial command 38 while receiving the command from the computer host. When the MAC 10 detects that the register requested is at high voltage level (1), it reads data of each register and sets the state of the Transmission Format register at high voltage level (1). Moreover, the MAC 10 controls the logic 26 of the PHY 20 according to the value of the Access State register so as to read or write data in the register of the PHY 20. The Access Address register is used to save address of the PHY 20 and address of the register of the PHY 20. According to the value of Transmission Format (high voltage level (1) means writing data, and low voltage level (0) means reading data), the PHY 20 reads data from or writes data into the register thereof. A Checking register is used for storing a checking code of transmitted data so as to prevent errors on data received by the PHY 20.

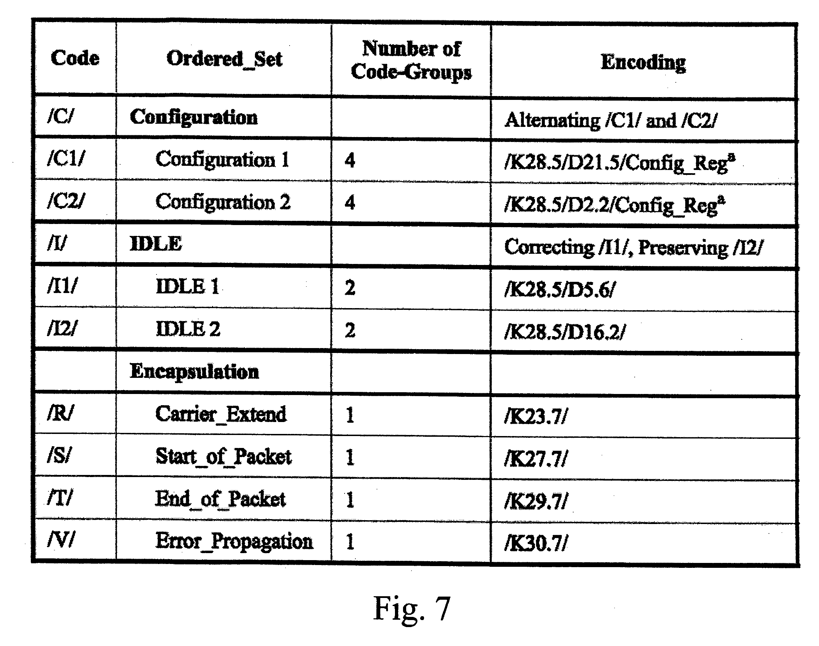

Refer to Fig. 7, Fig. 7 shows a list of signal definition of IEEE802.3 specification. IEEE 802.3 specification specifies idle signals including K28.5/D5.6 or K28.5/D 16.2, and the idle signals are meaningless data. Thus K28.5/D5.6 and K28.5/D 16.2 are modified to transmit serial command. For example, the serial command is 35-bit command and now is split up 6 parts for transmitting. For example, the 6 parts includes 5-bit first data, 6-bit second data, 6-bit third data, ... , and 6-bit sixth data. , First, the first part (5-bit first data) and a 3'b111 are transmitted and can be distinguished from D5.6 and D16.2. And 6-bit second data and a 2'b00 be transmitted. Thus it takes twelve times to transmit the whole data completely. The way of transmission is as following:
1. K28.5
2. D{3'b111, IBS[34:30]}
3. K28.5
4. D{2'b00, IBS[29:24]}
5. K28.5
6. D{2'b00, IBS[23:18]}
7. K28.5
8. D{2'b00, IBS[17:12]}
9. K28.5
10. D{2'b00, IBS[11:6]}
11. K28.5
12. D{2'b00, IBS[5:0]}

In an embodiment, the PHY 20 receives K28.5 and the front 3 bit of the next data is 3'b111, this represents the data received by the PHY 20 is the serial command. After receiving data for six times, the complete serial command is sent to a back-end circuit (i.e. logic circuit) for accessing data in registers. No matter reading data from or writing data into the register, the PHY 20 sends an acknowledge (ACK) signal back to inform the device that the data transmission is finished. The way of returning the ACK signal is by means of sending serial command and the register for transmission format is set at low-voltage level (0). After receiving the ACK signal, the MAC 10 sets the register for ready status at low-voltage level (1) to confirm that the register data has been accessed.

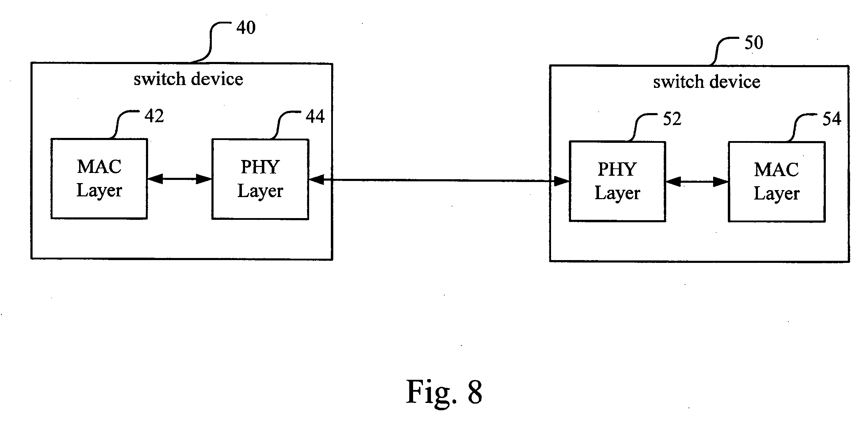

Refer to Fig. 8, Fig. 8 is a block diagram of another embodiment according to the present invention. A network system includes a first switch device 40 and a second switch device 50 coupled with each other by an optical fiber or a cable. When there is an error occurred on network routes such as a problem of the second switch device 50, users can access registers of an MAC 54 of the second switch device 50 through the first switch device 40 on computer facilities by a transmission way of the serial command shown in Fig. 5. Therefore, not only the status of the second switch device 50 is obtained but the problem of the second switch device 50 can be solved by accessing or setting or initializing the corresponding registers of the second switch device 50.

In summary, a circuit for accessing register data and a method thereof according to the present invention uses a first network device to generate serial command according to a plurality of command from host. Then the serial command is sent to a second network device through inter-packet gap for accessing register in the second network device. Therefore, purpose of simplifying circuit is achieved.

Additional advantages and modifications will readily occur to those skilled in the art. Therefore, the invention in its broader aspects is not limited to the specific details, and representative devices shown and described herein. Accordingly, various modifications may be made without departing from the scope of the general inventive concept as defined by the appended claims and their equivalents.

## Claims

1. A network device (10) comprising:
a first circuit (14) for receiving at least one command generated from a host, wherein the at least one command corresponds to data for reading or writing a register (28) of another network device (20), and for generating a serial command (38) according to the at least one received command; and
a second circuit (16) coupled to the first circuit (14) for receiving the serial command (38) and transmitting a first packet (32), an inter-packet gap (36), and a second packet (34), wherein the inter-packet gap (36) is between the first and the second packets (32, 34), and **characterized in that** the inter-packet gap (38) comprises at least one portion (360, 362, 364, 366) of the serial command (38), wherein the second circuit (16) splits the serial command (38) so that the inter-packet gap (36) comprises at least one portion (360, 362, 364, 366) of the serial command (38), wherein different inter-packet gaps (36) vary in size.

2. The network device (10) of claim 1, wherein the second circuit (16) comprises one of a SERDES interface and a Media Independent Interface (Mll).

3. The network device (10) of claim 1, wherein the first and the second packets (32, 34) and the inter-packet gap (36) are complied with an Ethernet specifcation.

4. The network device (10) of claim 1, wherein the network device is a media access controller (MAC) or a physical layer circuit (PHY).

5. The network device (10) of claim 1, further comprising:
a third circuit for extracting the at least one portion of the serial command (38) of the inter-packet gap (36), obtaining the at least one command corresponding to the serial command (38), and performing the at least one command.

6. The network (10) device of claim 5, wherein the third circuit recovers the serial command (38) according to the extracted data.

7. A method applied to a network device (10) comprising:
generating a serial command (38) according to at least one command generated from a host, wherein the at least one command corresponds to data reading or writing of a register (28) of another network device (20);
generating an inter-packet gap (36), wherein the inter-packet gap (36) comprises at least one portion of the serial command (38); and
transmitting a first packet (32), the inter-packet gap (36), and a second packet (34), wherein the inter-packet gap (36) is between the first and the second packets (32, 34) and different inter-packet gaps (36) vary in size, further comprising:
splitting the serial command (38) so that the inter-packet gap (36) comprises at least one portion (360, 362, 364, 366) of the serial command (38).

8. The method of claim 7, wherein the method further comprising:
re-sending the inter-packet gap (36) once an acknowledge signal is not received during a preset period of time.

9. The method of claim 7, wherein the first and the second packets (32, 34) and the inter-packet gap (36) are complied with an Ethernet specification.

10. The method of claim 7, wherein the network device (10) is a media access controller (MAC) or a physical layer circuit.

11. A method applied to a network device (20) comprising:
receiving a first packet (32), an inter-packet gap (36), and a second packet (34), wherein the inter-packet gap (36) is between the first and the second packets (32, 34) and different inter-packet gaps (36) vary in size, and the inter-packet gap (36) comprises at least one portion (360, 362, 364, 366) of a serial command (38) corresponding to at least one command generated from a host, wherein the at least one command comprises data reading or writing of register (28) of the network device (20);
obtaining the at least one command according to at least one portion (360, 362, 364, 366) of a serial command (38); and
performing the at least one command, wherein the step of obtaining comprises:
integrating and recovering at least one portion (360, 362, 364, 366) of a serial command (38) to obtain the at least one command.

12. The method of claim 11, further comprising:
sending an acknowledge signal when the at least one command is obtained.

13. The method of claim 11, wherein the first and the second packets (32, 34) and the inter-packet gap (36) are complied with an Ethernet spécification.

14. The method of claim 11, wherein the network device (20) comprises one of a media access controller (MAC) and a physical layer circuit.

## Patentansprüche

1. Netzwerkgerät (10) umfassend:
einen ersten Schaltkreis (14) zum Empfangen von mindestens einem von einem Host erzeugten Befehl, wobei der mindestens eine Befehl Daten zum Lesen oder Schreiben eines Registers (28) eines anderen Netzwerkgeräts (20) entspricht, und zum Erzeugen eines serielle Befehls (38) gemäß des mindestens einen empfangenen Befehls, und
einen mit dem ersten Schaltkreis (14) verbundenen zweiten Schaltkreis (16), zum Empfangen des seriellen Befehls (38) und zum Übertragen eines ersten Pakets (32), eines Zwischenpaketausschnitts (36) und eines zweiten Pakets (34), wobei sich der Zwischenpaketausschnitt (36) zwischen dem ersten und dem zweiten Paket (32, 34) befindet,
**dadurch gekennzeichnet, dass**
der Zwischenpaketausschnitt (36) mindestens einen Teil (360, 362, 364, 366) des seriellen Befehls (38) umfasst, wobei der zweite Schaltkreis (16) den seriellen Befehl (38) aufteilt, so dass der Zwischenpaketausschnitt (36) mindestens einen Teil (360, 362, 364, 366) des seriellen Befehls (38) umfasst, wobei unterschiedliche Zwischenpaketausschnitte (36) unterschiedliche Größen haben.

2. Netzwerkgerät (10) gemäß Anspruch 1, wobei der zweite Schaltkreis (16) entweder eine SERDES Schnittstelle oder eine Medien unabhängige Schnittstelle (MII media independent interface) umfasst.

3. Netzwerkgerät (10) gemäß Anspruch 1, wobei das erste und zweite Paket (32, 34) und der Zwischenpaketausschnitt (36) einer Ethernet - Spezifikation entsprechen.

4. Netzwerkgerät (10) gemäß Anspruch 1, wobei das Netzwerkgerät ein Medienzugangskontroller (MAC) oder ein Bitübertragungsschichtschaltkreis (PHY) ist.

5. Netzwerkgerät (10) gemäß Anspruch 1, weiter umfassend:
einen dritten Schaltkreis zum Extrahieren des mindestens einen Teils des seriellen Befehls (38) des Zwischenpaketausschnitts (36), zum Empfangen des mindestens einen dem seriellen Befehl (38) entsprechenden Befehls und zum Ausführen des mindestens einen Befehls.

6. Netzwerkgerät (10) gemäß Anspruch 5, wobei der dritte Schaltkreis den seriellen Befehl (38) anhand der extrahierten Daten wieder herstellt.

7. Verfahren zur Anwendung bei einem Netzwerkgerät (10), welches umfasst:
das Erzeugen eines seriellen Befehls (38) gemäß mindestens eines vom Host erzeugten Befehls, wobei der mindestens eine Befehl einem Datenschreiben oder Lesen eines Datenregisters (28) eines anderen Netzwerksgeräts (20) entspricht,
das Erzeugen eines Zwischenpaketausschnitts (38), wobei der Zwischenpaketausschnitt (38) mindestens einen Teil des seriellen Befehls (38) umfasst, und
das Übertragen des ersten Pakets (32), des Zwischenpaketausschnitts (36) und des zweiten Pakets (34), wobei sich der Zwischenpaketausschnitt (36) zwischen dem ersten und zweiten Paket (32, 34) befindet und unterschiedliche Zwischenpaketausschnitte (36) über unterschiedliche Größen verfügen, weiter umfassend:
das Aufteilen des seriellen Befehls (38), so dass der Zwischenpaketausschnitt (36) mindestens einen Teil (360, 362, 364, 366) des seriellen Befehls (38) umfasst.

8. Verfahren gemäß Anspruch 7, wobei die Methode weiter umfasst:
das erneute Senden des Zwischenpaketausschnitts (36), falls ein Bestätigungssignal während einer vorbestimmten Zeitdauer nicht empfangen wurde.

9. Verfahren gemäß Anspruch 7, wobei das erste und zweite Paket (32, 34) und der Zwischenpaketausschnitt (36) einer Ethernet - Spezifikation entsprechen.

10. Verfahren gemäß Anspruch 7, wobei das Netzwerkgerät ein Medienzugangskontroller (MAC) oder ein Bitübertragungsschichtschaltkreis (PHY) ist.

11. Verfahren zur Anwendung bei einem Netzwerkgerät (20), welchesumfasst:
das Empfangen eines ersten Pakets (32), eines Zwischenpaketausschnitts (36) und eines zweiten Pakets (34), wobei sich der Zwischenpaketausschnitt (36) zwischen dem ersten und zweiten Paket (32, 34) befindet und verschieden Zwischenpaketausschnitte (36) über unterschiedliche Größen verfügen und der Zwischenpaketausschnitt (36) mindestens einen Teil (360, 362, 364, 366) des seriellen Befehls (38) umfasst, welcher mindestens einem vom Host erzeugten Befehls entspricht, wobei der mindestens eine Befehl das Datenschreiben oder Lesen eines Registers (28) des Netzwerkgeräts (20) umfasst, das Empfangen des mindestens einen Befehls gemäß mindestens eines Teils (260, 362, 364, 366) eines seriellen Befehls (38) und
das Ausführen des mindestens einen Befehls, wobei der Schritt des Empfangens umfasst:
das Integrieren und das Wiederherstellen von mindestens einem Teil (360, 362, 364, 366) eines seriellen Befehls (38), um den mindestens einen Befehl zu erhalten.

12. Verfahren gemäß Anspruch 11, weiter umfassend:
das Senden eines Bestätigungssignals, sobald der mindestens eine Befehl erhalten wurde.

13. Verfahren gemäß Anspruch 11, wobei das erste und zweite Paket (32, 34) und der Zwischenpaketausschnitt (36) einer Ethernet - Spezifikation entsprechen.

14. Verfahren gemäß Anspruch 11, wobei das Netzwerkgerät (20) entweder einen Medienzugangscontroller (MAC) oder einen Bitübertragungsschichtschaltkreis (PHY) umfasst.

## Revendications

1. Dispositif de réseau (10) comprenant :
un premier circuit (14) pour recevoir au moins une commande générée par un hôte, la commande qui existe au moins correspondant à des données pour écrire ou lire un registre (28) d'un autre dispositif de réseau (20) et pour générer une commande série (38) selon la commande qui existe au moins qui a été reçue et
un second circuit (16) couplé au premier circuit (14) pour recevoir la commande série (38) et pour transmettre un premier paquet (32), un intervalle entre paquets (36) et un second paquet (34), l'intervalle entre paquets (36) étant entre le premier et le second paquet (32, 34) et
**caractérisé en ce que** l'intervalle entre paquets (38) comprend au moins une portion (360, 362, 364, 366) de la commande série (38), le second circuit (16) divisant la commande série (38) de manière à ce que l'intervalle entre paquets (36) comprenne au moins une portion (360, 362, 364, 366) de la commande série (38), différents intervalles entre paquets (36) étant de tailles diverses.

2. Dispositif de réseau (10) selon la revendication 1, le second circuit (16) comprenant l'une des interfaces, une interface SERDES et une interface indépendante du support (Mll).

3. Dispositif de réseau (10) selon la revendication 1, le premier et le second paquets (32, 34) et l'intervalle entre paquets (36) se conformant à une spécification Ethernet.

4. Dispositif de réseau (10) selon la revendication 1, le dispositif de réseau étant un contrôleur d'accès au support (MAC) ou un circuit de couche physique (PHY).

5. Dispositif de réseau (10) selon la revendication 1 comprenant de plus : un troisième circuit pour extraire la portion qui existe au moins de la commande série (38) de l'intervalle entre paquets (36), obtenir la commande qui existe au moins correspondant à la commande série (36) et exécuter la commande qui existe au moins.

6. Dispositif de réseau (10) selon la revendication 5, le troisième circuit récupérant la commande série (38) selon les données extraites.

7. Procédé appliqué à un dispositif de réseau (10) comprenant :
la génération d'une commande série (38) selon la commande qui existe au moins qui est générée par un hôte, la commande qui existe au moins correspondant à la lecture ou l'écriture d'un registre (28) d'un autre dispositif de réseau (20) ;
la génération d'un intervalle entre paquets (36), l'intervalle entre paquets (36) comprenant au moins une portion de la commande série (38) et
la transmission d'un premier paquet (32), de l'intervalle entre paquets (36) et d'un second paquet (34), l'intervalle entre paquets (36) étant entre le premier et le second paquet (32, 34) et différents intervalles entre paquets (36) étant de tailles diverses, comprenant de plus :
la division de la commande série (38) de telle manière que l'intervalle entre paquets (36) comprend au moins une portion (360, 362, 364, 366) de la commande série (38).

8. Procédé selon la revendication 7, le procédé comprenant de plus :
le renvoi de l'intervalle entre paquets (36) une fois qu'un signal d'acquittement n'est pas reçu pendant une période de temps prédéfinie.

9. Procédé selon la revendication 7, le premier et le second paquets (32, 34) et l'intervalle entre paquets (36) se conformant à une spécification Ethernet.

10. Procédé selon la revendication 7, le dispositif de réseau étant un contrôleur d'accès au support (MAC) ou un circuit de couche physique (PHY).

11. Procédé appliqué à un dispositif de réseau (20) comprenant :
la réception d'un premier paquet (32), d'un intervalle entre paquets (36) et d'un second paquet (34), l'intervalle entre paquets (36) étant entre le premier et le second paquet (32, 34) et différents intervalles entre paquets (36) étant de tailles diverses et l'intervalle entre paquets (36) comprenant au moins une portion (360, 362, 364, 366) d'une commande série (38) correspondant à au moins une commande générée par un hôte, la commande qui existe au moins correspondant à la lecture ou l'écriture d'un registre (28) du dispositif de réseau (20) ;
l'obtention de la commande qui existe au moins selon au moins une portion (360, 362, 364, 366) d'une commande série (38) et
l'exécution d'au moins une commande, l'étape d'obtention comprenant l'intégration et la récupération d'au moins une portion (360, 362, 364, 366) d'une commande série (38) pour obtenir la commande qui existe au moins.

12. Procédé selon la revendication 11 comprenant de plus :
l'envoi d'un signal d'acquittement lorsque la commande qui existe au moins est obtenue.

13. Procédé selon la revendication 11, le premier et le second paquets (32, 34) et l'intervalle entre paquets (36) se conformant à une spécification Ethernet.

14. Procédé selon la revendication 11, le dispositif de réseau (20) comprenant l'un des élément contrôleur d'accès au support (MAC) et circuit de couche physique (PHY).
